(19) **Europäisches Patentamt**
**European Patent Office**
**Office européen des brevets**

(11) **EP 3 327 471 B1**

(12) **FASCICULE DE BREVET EUROPEEN**

(45) Date de publication et mention de la délivrance du brevet:
**16.10.2019 Bulletin 2019/42**

(51) Int Cl.:
***G01V 99/00*** (2009.01)

(21) Numéro de dépôt: **17306536.8**

(22) Date de dépôt: **06.11.2017**

(54) **PROCEDE D'EXPLOITATION D'UN GISEMENT D'HYDROCARBURES PAR CALAGE D'HISTORIQUE DE PRODUCTION FONCTION DE LA DIAGENESE**

VERFAHREN ZUM ABBAU EINES KOHLENWASSERSTOFFLAGERS DURCH SIMULATION DES PRODUKTIONSVERLAUFS IN ABHÄNGIGKEIT VON DER DIAGENESE

METHOD FOR EXPLOITING A HYDROCARBON DEPOSIT BY PRODUCTION HISTORY MATCHING AS A FUNCTION OF THE DIAGENESIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2016 FR 1661634**

(43) Date de publication de la demande:
**30.05.2018 Bulletin 2018/22**

(73) Titulaires:
• **IFP Energies nouvelles**
**92852 Rueil-Malmaison Cedex (FR)**
• **Repsol, S.A.**
**28045 Madrid (ES)**

(72) Inventeurs:
• **LE RAVALEC, Mickaele**
**92500 Rueil-Malmaison (FR)**
• **BARBIER, Mickael**
**78400 Chatou (FR)**
• **LEON CARRERA, Maria Fernanda**
**28670 Madrid (ES)**
• **DOLIGEZ, Brigitte**
**75014 Paris (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A2- 2 034 130     US-A1- 2008 243 447**

• **M Pontiggia ET AL: "New Integrated Approach for Diagenesis Characterization and Simulation", , 14 février 2010 (2010-02-14), XP055393464, SPE Conference in Cairo, Egypt Extrait de l'Internet: URL:https://www.onepetro.org/download/conf erence-paper/SPE-127236-MS?id=conference-p aper/SPE-127236-MS [extrait le 2017-07-25]**
• **TILLIER E ET AL: "Local and continuous updating of facies proportions for history-matching", JOURNAL OF PETROLEUM SCIENCE AND ENGINEERING, ELSEVIER, AMSTERDAM, NL, vol. 73, no. 3-4, 1 septembre 2010 (2010-09-01), pages 194-203, XP027248643, ISSN: 0920-4105 [extrait le 2010-06-02]**

## Description

La présente invention concerne le domaine de l'exploration et de l'exploitation des gisements pétroliers ou de sites de stockage géologique de gaz.

L'exploration et l'exploitation d'un gisement, notamment pétrolier, nécessitent d'acquérir une connaissance aussi précise que possible de la géologie souterraine, et ce, afin de permettre une estimation des réserves, une estimation de la production, ou encore la définition de la gestion de l'exploitation du gisement dans le temps. En effet, la détermination de l'emplacement d'un puits de production ou d'un puits d'injection au sein d'un gisement d'hydrocarbures, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production, etc.) nécessitent de bien connaître le gisement.

Pour acquérir cette connaissance, l'industrie pétrolière allie les mesures sur champ (réalisées in situ, lors de campagnes sismiques, de mesures dans des puits, de carottages etc.) aux mesures réalisées en laboratoire ainsi qu'aux simulations numériques (réalisées au moyen de logiciels, tels qu'un simulateur d'écoulement).

La formalisation de cette connaissance passe ensuite par l'établissement d'une maquette, aussi appelée modèle géologique, visant à rendre compte, de façon approchée, à la fois de la structure et du comportement d'un gisement. Ce type de maquette est généralement représenté sur un ordinateur, sous la forme d'une représentation maillée (qui peut être une grille régulière, ou bien un maillage structuré ou non structuré de façon plus générale), chacune des mailles de la représentation maillée comportant au moins une et préférentiellement plusieurs valeurs de propriétés pétrophysiques relatives au gisement lui-même (telles que porosité, perméabilité, faciès etc.) et/ou de propriétés relatives aux fluides présents dans le gisement (saturations en eau/huile/gaz, perméabilités relatives, etc.).

Lorsqu'une représentation maillée respectant l'ensemble des données mesurées sur le terrain est finalement obtenue, cette représentation est utilisée pour prédire les déplacements de fluide dans la formation étudiée et planifier son développement futur, *via* la détermination de schémas d'exploitation. Pour ce faire, le spécialiste est amené 1) à sélectionner les zones d'intérêt (présentant les niveaux d'hydrocarbures les plus élevés par exemple) dans lesquelles forer de nouveaux puits, 2) à placer ces puits précisément dans les trois dimensions de l'espace, 3) à définir au moins un procédé de récupération (injection d'eau, de gaz, de vapeur etc.) et 4) à vérifier, par exemple *via* une simulation d'écoulement, si la production d'hydrocarbures, avec cette implantation des puits et ce procédé de récupération, est optimale. Une simulation d'écoulement, aussi appelée simulation de réservoir, est une technique permettant de simuler les écoulements de fluides au moyen d'un logiciel appelé simulateur d'écoulement et d'une représentation maillée de la formation étudiée.

L'élaboration d'une représentation maillée réaliste en ce qui concerne les écoulements comprend généralement une étape de calage d'historique (« history matching » en anglais). Le calage d'historique consiste à modifier certains des paramètres d'un modèle de réservoir, tels que les perméabilités, les porosités ou les skins de puits (représentant les endommagements autour du puits), les connections de failles..., pour minimiser les écarts entre les données d'historique simulées et mesurées. On appelle données d'historique, les données de production issues de mesures aux puits en réponse à la production du réservoir (production d'huile, production d'eau d'un ou plusieurs puits, ratio gaz/huile (GOR), proportion d'eau de production ("water cut"), et/ou les données de sismiques répétitives (impédances sismiques 4D dans une ou plusieurs régions, etc.).

Au cours du calage d'historique, on définit une fonction objectif qui mesure les écarts entre les données d'historique observées et les données d'historique simulées. Puis un processus de minimisation de la fonction objectif est mis en place. Cette minimisation est généralement pilotée par un algorithme d'optimisation, basé sur un calcul de gradients de la fonction objectif. D'autres techniques permettent d'échantillonner l'espace des modèles respectant les données de production plutôt que de chercher à atteindre le modèle le plus probable parmi ceux-ci (par exemple, les algorithmes génétiques ou le recuit-simulé).

## État de la technique

Les documents suivants seront cités au cours de la description :

Barbier, M., Hamon, Y., Doligez, B., Callot, J.-P., Floquet, M., Daniel, J.-M., 2012, Stochastic joint simulation of facies and diagenesis,: A case study on early diagenesis of the Madison formation (Wyoming, USA), OGST, 67(1), 123-145

Caers, J., Hoffman, T., The probability perturbation method: A new look at Bayesian inverse modeling, Math. Geol., 38(1), 81-100, 2006, DOI:10.1007/s11004-005-9005-9

Doligez, B., Hamon, Y., Barbier, M., Nader, F., Lerat, O., 2011, Advanced workflows for joint modelling of sedimentary facies and diagenetic overprint. Imact on reservoir quality, SPE 146621, SPE ATCE, Denver, CO, USA

Gosselin, O., Cominelli, A. van den Berg, S. et Chowdhury, S.D.: "A Gradient-Based Approach for History Matching of Both Production and 4D Seismic Data", Proceeding 7th European Conférence on the Math. of Oil Recovery, Baveno, Italy, 2000)

Guardiano, F., Srivastava, M., 1993, Multivariate geostatistics: beyond bivariate moments, In: Soares, A. (Ed.), Geostatistics-Troia. Kluwer Academic Publications, Dordrecht, 133-144, http://dx.doi.org/10.1007/978-94-011-1739-5 12.

Holland, J.H., 1975, Adaptation In Natural And Artificial Systems, University Of Michigan Press, Ann Arbor

Hu, L.-Y., 2000, Graduai deformation and iterative calibration of Gaussian-related stochastic models, Mathematical Geology, 32(1), 87-108

Le Ravalec-Dupin, M., Da Veiga, S., Cosimulation as a perturbation method for calibrating porosity and permeability fields to dynamic data, Computers and Geosciences, 37, 1400-1412, 2011, DOI:10.1016/j.cageo.2010.10.013

Le Ravalec, M., Doligez, B., Lerat, O., 2014, Integrated reservoir characterization and modeling,http://books.ifpenergiesnouvelles.fr/ebooks/integrated reservoir characterizatio n and modeling/, doi: 10.2516/ifpen/2014001

Le Ravalec, M., Hu, L.-Y., Noetinger, B., 1999, Stochastic Reservoir Modeling Constrained to Dynamic Data: Local Calibration and Inference of the Structural Parameters, SPE 56556, SPE ATCE, Houston, TX, USA

Pontiggia, M., Ortenzi, A., Ruvo, L., 2010, New integrated approach for diagenesis characterization and simulation, SPE 127236, SPE North Africa Technical Conférence and Exhibition, Cairo, Egypt

Press, W.H., Teufolsky, S.A., Vetterling, W.T., Flannery, B.P., 1988, Numerical recipes in C, Cambridge University Press, New York, NY, USA

Renard, D., Beucher, H., Doligez, B., 2008, Heterotopic bi-categorical variables in pluri-Gaussian truncated simulation, VIII Int. Geostat. Congress, GEOSTATS 2008, 1, pp. 289-298

Roggero, F., Enchery, G., Ponsot-Jacquin, C., 2011, Method for gradually modifying lithologic facies proportions of a geological model, Patent number 7970593

Tarantola, A., 1987, Inverse Problem Theory - Methods For Data Fitting And Model Parameter Estimation. Elsevier Science Publishers, Amsterdam, The Netherlands, 613 pp

Tillier, E., Enchery, G., Le Ravalec, M., Gervais, V., 2010, Local and continuous updating of facies proportions for history-matching, Journal Petroleum Science and Engineering, 73(3-4), 194-203

On connaît des techniques calage d'historique pour lesquelles les paramètres d'ajustement sont relatifs aux faciès lithologiques rencontrés dans la formation souterraine étudiée.

On peut en particulier citer la technique décrite dans le document EP 1978379 A1 (US 7970593 B2) qui consiste à modifier les proportions de faciès dans chacune des mailles de la représentation maillée représentative de la formation étudiée de façon à minimiser un écart entre données de production simulées et données de production mesurées, des propriétés d'écoulement (porosité, perméabilité par exemple) étant attribuées à chacun des faciès lithologiques considérés. Plus précisément, cette technique décrit un ajustement itératif des proportions de faciès tout en respectant certaines règles de proportionnalité des faciès définies par l'ingénieur.

On connaît également la technique décrite dans le document (Le Ravalec *et al.,* 1999) qui consiste à ajuster la variabilité spatiale (paramétrée par la portée d'un variogramme) des faciès au sein de la représentation maillée de façon à minimiser un écart entre données de production simulées et données de production Le document US2008/243447 divulgue une technique de calage historique pour laquelle les paramètres d'ajustement sont relatifs aux faciès lithologiques rencontrés dans la formation. Le document "New integrated approach for diagenesis characterization and simulation", M. Pontiggia, 2010, décrit un procédé qui prend en compte les processus diagénétiques pour obtenir une prédiction d'écoulement plus précise.

Par contre, il apparaît qu'à ce jour, les effets des processus diagénétiques ne sont pas pris en compte dans la mise à jour du modèle de réservoir par calage d'historique. Or, la diagenèse figure parmi les processus physico-chimiques majeurs de l'histoire d'un bassin sédimentaire. La diagenèse englobe tous les processus de transformation chimique, biochimique et physique des sédiments s'étant déposés dans un bassin, en roches sédimentaires compactes. En effet, les sédiments qui se déposent dans un bassin sédimentaire sont meubles et riches en eau. Les processus affectent ces sédiments dès leurs dépôts et se poursuit tout au long de leur enfouissement, c'est-à-dire, à mesure que d'autres sédiments viennent recouvrir les recouvrir progressivement sous plusieurs dizaines, centaines ou même milliers de mètres de matériel. À de telle profondeur, les processus diagénétiques sont influencés par les conditions de pression et de température.

Ces transformations se déroulent selon différentes étapes, appelées aussi phases diagénétiques, qui varient selon la nature des sédiments, de la nature des fluides circulant entre ces sédiments et des conditions d'enfouissement.

Ces processus comprennent entre autres la compaction (tassement mécanique lié au poids des terrains déposés par-dessus le sédiment ; ce processus tend à réduire la porosité dans la roche et à augmenter les points de contact entre les grains), la dissolution des grains à leurs points de contact, ou encore la cimentation (précipitation de cristaux d'un minéral donné dans les espaces inter-granulaires liant les particules sédimentaires entre elles).

L'analyse de lames minces extraites d'une carotte prélevée au sein d'une formation souterraine permet d'étudier l'histoire diagénétique d'une roche. Il est notamment question de définir la succession dans le temps de l'ensemble des transformations minéralogiques ayant affecté les sédiments depuis leur dépôt. Il est possible de qualifier et quantifier la proportion de chacune de ces transformations minéralogiques dans un échantillon donné soit visuellement, en définissant par exemple un type et/ou un degré de diagenèse (correspondant à une proportion faible, moyenne ou importante d'une phase diagénétique donnée), soit en laboratoire par des techniques de laboratoire (DRX, géochimie élémentaire, etc.), ou encore par analyse d'image en utilisant un logiciel de traitement d'image. Mais cette information est parcellaire, en quelques points le long du puits duquel a été extraite la carotte. L'extrapolation de ces informations parcellaires, entre les puits, est donc incertaine. Or les processus physico-chimiques subis par un dépôt sédimentaire au cours de la diagenèse affectent significativement les propriétés d'écoulement de la roche résultant de ce dépôt sédimentaire. Par conséquent, il peut se produire que les représentations maillées utilisées dans les étapes classiques d'exploration et d'exploitation pétrolière, notamment lors d'un calage d'historique, soient basées sur des hypothèses erronées concernant l'état diagénétique des différents faciès présents dans une formation.

La présente invention vise à la prise en compte de l'état diagénétique d'une roche comme l'un des paramètres d'ajustement lors d'un calage d'historique.

**Le procédé selon l'invention**

De façon générale, l'invention concerne un procédé pour exploiter une formation souterraine comportant des hydrocarbures, ladite formation comportant au moins un faciès ayant subi au moins une phase diagénétique au cours des temps géologiques, à partir d'au moins un échantillon de roche issu de ladite formation, de données de production mesurées relatives à ladite formation et d'une représentation maillée représentative de ladite formation, ladite représentation maillée étant formée de mailles, chacune desdites mailles de ladite représentation maillée comportant au moins un indicateur relatif à la répartition desdits faciès présents dans ladite maille. Le procédé mis en oeuvre par ordinateur selon l'invention comprend au moins les étapes suivantes :

A) à partir au moins de mesures réalisées sur ledit échantillon, pour au moins un desdits faciès et pour chacune desdites mailles de ladite représentation maillée, on détermine une valeur d'au moins un paramètre de l'état diagénétique dudit faciès ;

B) à partir desdites données de production mesurées, pour au moins une maille de ladite représentation maillée, on met à jour au moins lesdites valeurs desdits paramètres de l'état diagénétique d'au moins un desdits faciès selon au moins les étapes suivantes :

i. pour chacune desdites mailles de ladite représentation maillée, à partir desdites valeurs desdits paramètres déterminés de l'état diagénétique desdits faciès, on détermine au moins une propriété pétrophysique relative à l'écoulement dans ladite formation ;

ii. au moyen d'un simulateur d'écoulement et de ladite représentation maillée remplie en propriétés pétrophysiques relatives à l'écoulement, on simule des données de production relatives à ladite formation ;

iii. on détermine une fonction objectif mesurant au moins une différence entre lesdites données de production mesurées et lesdites données de production simulées ;

iv. pour au moins une desdites mailles de ladite représentation maillée, on modifie, à partir de ladite fonction objectif, au moins ladite valeur dudit paramètre de l'état diagénétique pour un desdits faciès ;

et on réitère les étapes i) à iv) jusqu'à ce qu'un critère d'arrêt prédéterminé soit atteint ;

C- à partir d'au moins ladite représentation maillée mise à jour, on détermine un schéma d'exploitation desdits hydrocarbures de ladite formation, et on exploite lesdits hydrocarbures de ladite formation.

Selon un mode de mise en oeuvre de l'invention, ledit paramètre représentatif de l'état diagénétique d'un desdits faciès peut correspondre à la variabilité spatiale d'au moins un degré diagénétique d'au moins une desdites phases diagénétiques subies par ledit faciès.

Selon une variante de l'invention, ladite variabilité spatiale peut être paramétrée par la portée d'un variogramme portant sur la distribution dudit degré diagénétique de ladite phase diagénétique.

Selon un mode de mise en oeuvre de l'invention, ledit paramètre représentatif de l'état diagénétique d'un desdits faciès peut correspondre à la proportion d'au moins un degré diagénétique d'au moins une desdites phases diagénétiques subies par ledit faciès.

Selon une variante de l'invention, ledit paramètre peut correspondre à la proportion d'un desdits degrés diagénétiques, les proportions des autres degrés diagénétiques restant constantes relativement.

Selon un mode de mise en oeuvre de l'invention, à l'étape B, on peut mettre en outre à jour un paramètre représentatif de la distribution desdits faciès dans ladite formation et/ou une desdites propriétés pétrophysiques relatives à l'écoulement dans ladite formation.

Selon une réalisation de l'invention, on peut réaliser l'étape B) ii) au moyen d'une simulation bi-plurigaussienne.

Selon une variante de mise en oeuvre de l'invention, ledit critère d'arrêt peut correspondre à un minimum de ladite fonction objectif, à un nombre maximal d'itérations de l'étape B), ou bien à une différence maximale entre lesdites données de production mesurées et lesdites données de production simulées.

Avantageusement, ladite détermination dudit schéma d'exploitation peut comprendre la détermination de la position et de la géométrie de puits injecteurs et/ou producteurs, et/ou la détermination du type de récupération assistée.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une quelconque des variantes de l'invention, lorsque ledit programme est exécuté sur un ordinateur.

D'autres caractéristiques et avantages du procédé selon l'invention, apparaîtront à la lecture de la description ci-après d'exemples non limitatifs de réalisations, en se référant aux Figures annexées et décrites ci-après.

**Présentation succincte des figures**

- la Figure 1a présente la distribution des faciès pour une section à z constant au sein d'une représentation maillée d'une formation souterraine.

- la Figure 1b présente la distribution des degrés diagénétiques par faciès pour la même section à z constant que celle présentée en Figure 1a.

- La Figure 2 présente la distribution des degrés diagénétiques par faciès pour la même section à z constant que celle présentée en Figure 1a, obtenue après une mise à jour d'un paramètre représentatif de la distribution des degrés diagénétiques selon une première mise en oeuvre de l'invention.

- La Figure 3 présente la distribution des phases diagénétiques par faciès pour la même section à z constant que celle présentée en Figure 1a, obtenue après une mise à jour d'un paramètre représentatif de la distribution des degrés diagénétiques selon une seconde mise en oeuvre de l'invention.

- La Figure 4 présente la distribution des phases diagénétiques par faciès pour la même section à z constant que celle présentée en Figure 1a, obtenue après une mise à jour d'un paramètre représentatif de la distribution des degrés diagénétiques selon une troisième mise en oeuvre de l'invention.

- La Figure 5 présente l'évolution du « water cut » mesuré au cours du temps, simulé à la première itération d'une mise en oeuvre du procédé selon l'invention, et simulé à l'itération finale de cette mise en oeuvre du procédé selon l'invention.

- La Figure 6 présente l'évolution, au cours des itérations du procédé selon l'invention, de la fonction objectif et du paramètre représentatif de l'état diagénétique à ajuster dans le cas de la mise en oeuvre du procédé selon l'invention correspondant à celle de la Figure 5.

## Description détaillée du procédé

De façon générale, l'un des objets de l'invention concerne un procédé d'exploitation d'une formation souterraine comportant des hydrocarbures. Ce procédé comprend une étape de calage d'historique dont au moins l'un des paramètres d'ajustement est l'état diagénétique d'au moins un faciès lithologique rencontré au sein de la formation souterraine.

Les définitions suivantes sont utilisées au cours de la description de l'invention :

- faciès : on appelle faciès, ou encore faciès lithologique une classe de roches présentant les mêmes caractéristiques. Par exemple, le faciès lithologique peut se référer à la nature géologique de la roche (argile, grès, calcaire...), à son type de porosité (roche non consolidée et très poreuse; roche peu poreuse...), à la nature du fluide piégé dans sa porosité (saumure; huile; gaz...). Ce type d'information est le plus souvent représenté par une propriété catégorielle, c'est-à-dire par un ensemble fini de valeurs symboliques, représentées par des catégories (par exemple les catégories C0, C1, C2, etc.). Il s'agit d'une propriété particulièrement sensible pour l'exploitation d'un réservoir. En particulier, les proportions de faciès lithologiques peuvent avoir un impact majeur sur le comportement dynamique d'un champ pétrolier. Elles peuvent être identiques sur l'ensemble du domaine (cas stationnaire) ou varier selon la position (cas non stationnaire).

- paramètre représentatif de l'état diagénétique d'un faciès : il s'agit d'un paramètre qui rend compte des processus physico-chimiques subis par un faciès. Notamment, il peut s'agir d'un paramètre relatifs aux différentes phases de diagénèse subies par un faciès donné au sein d'une formation souterraine, tel qu'un un paramètre décrivant la variabilité spatiale des phases diagénétiques subies par un faciès donné, ou la variabilité des proportions des phases diagénétiques observées au sein d'un même faciès. Il peut aussi s'agir d'un paramètre décrivant la variabilité spatiale des degrés diagénétiques de chacune des phases diagénétiques subies par un faciès donné, ou encore des proportions des degrés diagénétiques de chacune des phases diagénétiques observées au sein d'un même faciès.

Le procédé selon l'invention requiert de disposer :

- d'au moins un échantillon de roche de la formation souterraine étudiée : cet échantillon peut avoir été prélevé *in situ,* par carottage par exemple ;

- de données de production mesurées relatives à la formation souterraine étudiée : il s'agit de données mesurées concrètement sur un gisement, relatives à la production de ce gisement. Il peut s'agir du volume cumulé d'huile produit, du débit d'huile, du « water cut » (rapport du volume d'eau produit sur volume total de liquide produit), de la pression, du rapport du volume de gaz sur le volume d'huile, etc. Il peut aussi s'agir d'un essai de puits. Ces données de production sont mesurées au niveau de puits forés dans la formation souterraine étudiée.

- une représentation maillée de ladite formation : il s'agit d'une maquette de la formation souterraine étudiée, représentée généralement sur ordinateur sous la forme d'un maillage ou grille, chacune des mailles de cette grille comportant une ou plusieurs valeurs de propriétés relatives à la formation étudiée. Selon l'invention, la représentation maillée comporte en chaque maille au moins une information sur la répartition des faciès présents dans la maille considérée. La répartition des faciès dans une maille peut être le pourcentage de chacun des faciès présents dans la maille considérée. Un faciès peut être représenté sous la forme d'une propriété catégorielle, c'est-à-dire un ensemble fini de valeurs symboliques, représentées par des catégories (par exemple les catégories C0, C1, C2, etc.). Selon une mise en oeuvre, on utilise des données aux puits (données de diagraphie) pour déterminer une ou plusieurs courbes de proportions verticales de faciès. Ces courbes donnent la probabilité d'occurrence de chaque faciès en fonction de la profondeur. Ces courbes sont ensuite utilisées pour construire, à partir de techniques de krigeage notamment, une matrice de proportion de faciès, qui détermine pour chaque maille de la grille représentative du réservoir les probabilités d'occurrence des différents faciès. Selon une mise en oeuvre de l'invention, la représentation maillée correspond au modèle géologique, construit dans le but de décrire aussi précisément que possible la structure et les propriétés (dans le cas présent, au moins une répartition des différents faciès dans chaque maille) de la formation étudiée. Un modèle géologique se doit de vérifier autant que possible les propriétés relatives à la formation étudiée collectées sur le terrain : les données de diagraphie mesurées le long des puits, les mesures réalisées sur des échantillons de roche prélevés dans les puits, les données déduites de campagnes d'acquisition sismique, ou encore des données de production comme les débits d'huile, d'eau, les variations de pression etc. Selon une mise en oeuvre de l'invention, la représentation maillée comporte également des propriétés nécessaires à une simulation d'écoulement, telles que des valeurs de porosité, de perméabilité, de saturation en chacune des mailles de la représentation maillée, valeurs qui seront mises à jour par le procédé selon l'invention. Le spécialiste en exploration et exploitation pétrolière a pleine connaissance de techniques pour construire une telle représentation maillée d'une formation. Le modèle géologique a généralement des mailles fines et par voie de conséquence un nombre de mailles important. Le calage d'historique nécessitant de réaliser plusieurs simulations d'écoulement, il peut s'avérer nécessaire de déterminer une représentation maillée aux mailles plus grossières, afin de réduire le temps de calcul des simulations d'écoulement. Cette étape, bien connue dans le domaine de l'exploration et exploitation pétrolière consiste à réaliser un « upscaling » (« mise à l'échelle » en français), qui permet de passer d'une représentation à mailles fines à une représentation à mailles grossières, aussi appelée modèle de réservoir. De façon générale, cette technique consiste à calculer un modèle grossier qui soit équivalent au modèle fin du point de vue des propriétés dynamiques (c'est-à-dire des propriétés liées à l'écoulement des fluides, telles que la perméabilité).

- un simulateur d'écoulement : un simulateur d'écoulement est un logiciel exécuté sur ordinateur permettant de réaliser des simulations d'écoulement de fluides au sein d'un gisement. Ces simulations sont réalisées en résolvant un système d'équations aux dérivées partielles représentatives des écoulements, en utilisant par exemple des méthodes de volumes finis appliquées à une représentation maillée. De façon générale, lors d'une expérience de simulation de réservoir, l'ingénieur réservoir définit une durée sur laquelle il souhaite simuler les écoulements dans la formation d'intérêt. Puis ces équations sont résolues par un schéma numérique, pas de temps après pas de temps, la taille du pas de temps (pouvant être une fonction ou une constante) étant intrinsèquement liée au schéma numérique choisi, et ce afin de garantir la stabilité de ce schéma numérique. Le résultat d'une simulation de réservoir est en particulier une succession d'instantanés (comme des images prises à différents instants) représentatifs de l'état d'écoulement des fluides dans la formation étudiée. Par exemple, le logiciel PumaFlow ® (IFP Énergies nouvelles, France) est un simulateur d'écoulement.

Le procédé selon l'invention comporte au moins les étapes suivantes :

**1. Détermination d'une représentation maillée renseignée sur l'état diagénétique d'un faciès**

    **1.1. Mesures expérimentales**

    **1.2. Caractérisation de l'état diagénétique**

    **1.3. Remplissage de la représentation maillée**

**2. Calage d'historique de production**

    **2.1. Détermination de propriétés pétrophysiques**

    **2.2. Simulation de données de production**

    **2.3. Processus itératif d'optimisation**

**3. Exploitation des hydrocarbures de la formation**

Les différentes étapes du procédé selon l'invention sont détaillées ci-après.

**1. Détermination d'une représentation maillée renseignée sur l'état diagénétique d'un faciès**

Au cours de cette étape, il s'agit, à partir au moins de mesures réalisées sur au moins un échantillon de roche issu de ladite formation, de déterminer une valeur d'au moins un paramètre représentatif de l'état diagénétique d'au moins un faciès donné présent dans une maille donnée, et ce pour chacune des mailles de la représentation maillée représentative de la formation souterraine étudiée.

Avantageusement, cette étape est réalisée au moyen de plusieurs échantillons de roche issus de la formation souterraine, prélevés en différentes localisations spatiales de la formation, de manière à caractériser de la manière la plus précise possible l'état diagénétique des faciès rencontrés dans la formation.

1.1. **Mesures expérimentales**

Au cours de cette sous-étape, il s'agit de caractériser l'état diagénétique d'au moins un faciès présent dans au moins un échantillon de roche issu de la formation souterraine étudiée.

Selon une mise en oeuvre de l'invention, cette caractérisation peut s'effectuer par une analyse de lames minces extraites d'une carotte. Cette analyse, effectuée sous un microscope conventionnel et/ou sous microscope électronique, donne accès à de nombreuses informations pétrographiques concernant l'échantillon de roche étudié (texture, type de grains, type de phases diagénétiques, porosité, etc.). On peut de cette manière identifier par exemple les différentes phases diagénétiques subies par un faciès, et éventuellement de qualifier le degré diagénétique de chacune de ces phases diagénétiques (on peut par exemple qualifier si le faciès considéré a subi un degré faible, moyen ou fort de la phase diagénétique considérée). Selon une variante de réalisation de l'invention, cette caractérisation de l'état diagénétique d'un échantillon de roche à partir de lame minces peut être réalisée au moyen d'une analyse d'image (par exemple au moyen d'un logiciel de traitement d'image par comptage de points).

Avantageusement, on peut répéter cette sous-étape pour l'ensemble des échantillons de roche disponibles pour la formation souterraine étudiée. La répétition de ces étapes à l'ensemble des échantillons donne accès à l'évolution verticale et latérale qualitative et/ou quantitative des informations désirées (par exemple le type et les proportions des grains, des phases diagénétiques, du réseau poreux, etc.).

Avantageusement, on peut répéter cette sous-étape pour l'ensemble des faciès présents dans le ou les échantillons de roche considérés.

## 1.2. **Caractérisation de l'état diagénétique**

A partir de l'analyse expérimentale décrite précédemment, on peut en déduire des informations sur l'état diagénétique du faciès étudié, comme par exemple sur la nature et sur la proportion (qualitative et/ou quantitative) des différentes phases diagénétiques subies par le faciès.

Selon l'invention, on caractérise cet état diagénétique par au moins un paramètre. Ce paramètre peut concerner :

- La variabilité spatiale des degrés diagénétiques d'au moins une phase diagénétique subie par un faciès donné : cette variabilité spatiale peut être évaluée au moyen de techniques géostatistiques, bien connues du spécialiste, à partir des informations sur l'état diagénétique obtenues au cours de la sous-étape précédente, par exemple à partir d'une l'analyse de lames minces. On peut par exemple construire un variogramme de la distribution spatiale des degrés diagénétiques pour chacune des phases diagénétiques d'un faciès donné, et paramétrer l'état diagénétique de cette phase par la portée de ce variogramme (cf Le Ravalec *et al.,* 1999). Cette variabilité spatiale peut aussi être représentée par des nombres aléatoires permettant de générer une réalisation d'une fonction aléatoire, ces nombres contrôlant la distribution spatiale des hétérogénéités. Selon une mise en oeuvre de l'invention, on peut utiliser pour ce faire la méthode de déformation graduelle (Hu, 2000), la méthode de perturbation des probabilités (Caers et Hoffman, 2006) ou la méthode de déformation par co-simulation (Le Ravalec-Dupin et Da Veiga, 2011) pour modifier les nombres aléatoires et obtenir une nouvelle réalisation de la fonction aléatoire considérée, c'est à dire une réalisation montrant une distribution différente des degrés des phases diagénétiques dans l'espace.

- Les proportions des degrés diagénétiques d'au moins une phase diagénétique subie par un faciès donné : selon une mise en oeuvre de l'invention, une paramétrisation basée sur les proportions des degrés diagénétiques d'une phase diagénétique observée au sein d'un même faciès est basée sur l'intensité de cette phase diagénétique. Un exemple d'une telle paramétrisation est donné dans le Tableau 1. Dans cet exemple, trois faciès sont considérés (faciès A, B et C) et sont affectés par une phase diagénétique quelconque dont la proportion dans chacun des faciès est qualifiée de « faible » (notée L), « modérée » (notée M) et « forte » (notée H). Dans le cas de cet exemple, neuf paramètres sont à mettre à jour par le calage historique. Toutefois, dans la réalité, les faciès sédimentaires et les phases diagénétiques subies par un faciès donné sont plus nombreux. De plus, les proportions varient de façon significative dans l'espace. On aurait alors à traiter un nombre considérable de paramètres, ce qui rendrait la résolution du problème difficile.

Selon une mise en oeuvre de l'invention destinée à réduire le nombre de paramètres à déterminer, on peut piloter les variations des proportions de degré diagénétique d'au moins une phase diagénétique à partir d'un unique coefficient « a », défini pour chacune des phases diagénétiques considérées, et variant entre 0 et 1. La valeur de ce coefficient, dit degré diagénétique de contrôle, correspond à la proportion d'un des degrés diagénétiques d'une phase diagénétique donnée, les proportions des autres degrés diagénétiques de la phase considérée étant constantes relativement entre elles. Par exemple, dans le cas de trois proportions P1, P2 et P3 (correspondant respectivement à une proportion « faible », « moyenne », « importante ») d'une phase diagénétique donnée d'un faciès donné, on peut définir une telle paramétrisation de la manière suivante :

$$pP1_{new} = a$$

$$pP2_{new} = (1+(pP1_{init} - a)/(pP2_{init} + pP3_{init}))pP2_{init}$$

$$pP3_{new} = (1+(pP1_{init} - a)/(pP2_{init} + pP3_{init}))pP3_{init}$$

où p est la notation utilisée pour indiquer une proportion, *init* indique les valeurs initiales des proportions de degré diagénétique et *new* celles après ajustement. Ainsi, dans cet exemple de paramétrisation, le degré diagénétique de contrôle est le degré P1, la proportion du degré de contrôle est donnée par le paramètre a, et les proportions des autres degrés diagénétiques en découlent directement. Ainsi, selon cette paramétrisation, le coefficient a devient le seul paramètre à ajuster : en le modifiant, on modifie l'ensemble des proportions des degrés diagénétiques pour la phase diagénétique considérée du faciès considéré. Ainsi, si on augmente la proportion de degré diagénétique P1 de 10%, on réduit d'autant les proportions des degrés diagénétiques P2 et P3. Toutefois, on préserve le rapport entre les proportions des degrés diagénétiques P2 et P3. Selon une variante de l'invention, on peut mettre en oeuvre cette paramétrisation pour chacune des N phases diagénétiques d'un faciès donné. Selon une autre mise en oeuvre de l'invention, on utilise non pas un unique degré de contrôle par phase diagénétique, mais un groupe de degrés diagénétiques (par exemple on forme le groupe de contrôle L+M dans l'exemple précédemment décrit). Selon une autre alternative, on fixe comme constante la proportion d'un degré diagénétique donné ou d'un groupe de degrés diagénétiques, et on modifie uniquement les proportions des autres degrés diagénétiques. Par la suite, cette paramétrisation sera appelée « paramétrisation par degré(s) de contrôle ».

**Tableau 1**

|          | L      | M      | H   |
|----------|--------|--------|-----|
| Faciès A | 33,3%  | 16,7%  | 50% |
| Faciès B | 50%    | 50%    | 0   |
| Faciès C | 100%   | 0      | 0   |

A l'issue de cette sous-étape, on dispose d'au moins une valeur d'au moins un paramètre reflétant l'état diagénétique d'au moins un faciès, et ce pour au moins un échantillon de roche prélevé au sein de la formation.

### 1.3. Remplissage de la représentation maillée

Au cours de cette sous-étape, il s'agit de compléter la représentation maillée (qui contient à ce stade au moins les informations relatives aux proportions de faciès) avec les valeurs d'au moins un paramètre reflétant l'état diagénétique d'au moins un des faciès, valeurs déterminées au moyen de la mise en oeuvre des deux sous-étapes précédentes.

Du fait du nombre restreint d'échantillons de roche, les informations concernant le paramètre représentatif de l'état diagénétique d'un faciès peuvent être limitées dans l'espace. Selon un mode de réalisation de l'invention, le remplissage des mailles de la représentation maillée peut nécessiter de recourir à des simulations de type géostatistique. Avantageusement, le remplissage des mailles tient compte de la continuité et de la connectivité des structures géologiques étudiées.

Selon une mise en oeuvre de l'invention, on utilise la technique décrite dans le document (Renard *et al.,* 2008) pour générer une représentation maillée rendant compte de la distribution des faciès et des phases diagénétiques par faciès. Cette technique consiste en une simulation bi-plurigaussienne, qui considère deux modèles plurigaussiens, un pour les faciès et un pour la diagenèse. Doligez *et al.* (2011) ou Barbier *et al.* (2012) présentent des cas d'application et appliquent des techniques de simulation plurigaussienne, bi-plurigaussienne, ou encore emboîtées.

Ainsi, à l'issue de cette étape, on dispose d'une représentation maillée pour laquelle, dans chaque maille, est renseignée au moins une valeur d'au moins un paramètre représentatif de l'état diagénétique d'au moins un faciès présent dans la formation souterraine étudiée.

### 2. Calage d'historique de production

Au cours de cette étape, il s'agit, à partir de données de production mesurées, de mettre à jour les valeurs présentes dans les mailles de la représentation maillée relatives à au moins un paramètre représentatif de l'état diagénétique d'au moins un faciès.

### 2.1. **Détermination de propriétés pétrophysiques**

Au cours de cette sous-étape, il s'agit dans un premier temps de convertir les valeurs relatives aux paramètres représentatifs de l'état diagénétique en propriétés pétrophysiques, telles que la porosité et la perméabilité. De cette manière, la représentation maillée comporte des propriétés relatives aux écoulements dans la formation.

Le spécialiste a parfaite connaissance de techniques pour une telle conversion. On pourra se référer par exemple aux documents (Doligez *et al.,* 2011 ; Barbier *et al.,* 2012).

### 2.2. **Simulation de données de production**

Au cours de cette sous-étape, il s'agit, au moyen d'un simulateur d'écoulement et de la représentation maillée remplie en propriétés pétrophysiques à l'issue de la sous-étape précédente, de simuler des données de production relatives à ladite formation. Cette étape est résolue au moyen d'un simulateur d'écoulement, tel que le logiciel PumaFlow ® (IFP Énergies nouvelles, France).

Très préférentiellement et afin d'avoir des données de production mesurées et simulées pouvant être comparées, la simulation de données de production est effectuée aux emplacements dans la représentation maillée correspondant aux emplacements réels des puits traversant la formation étudiée et pour lesquels on dispose de données de production mesurées.

Très préférentiellement et afin d'avoir des données de production mesurées et simulées pouvant être comparées, on simule à l'aide du simulateur d'écoulement le même type de données de production que le type de données de production mesurées. Par type de donnée de production on entend par exemple le volume cumulé d'huile produit, le débit d'huile, le « water cut » (rapport du volume d'eau produit sur volume total de liquide produit), la pression, le rapport du volume de gaz sur le volume d'huile, etc. Il peut aussi d'agir d'un essai de puits.

### 2.3. **Processus itératif d'optimisation**

Au cours de cette sous-étape, il s'agit de déterminer une fonction objectif mesurant au moins la différence entre les données de production mesurées et les données de production simulées au cours de la sous-étape précédente, puis de déterminer de manière itérative, les valeurs des paramètres représentatifs de l'état diagénétique permettant de satisfaire un certain critère d'arrêt prédéfini par le spécialiste.

Selon un mode de mise en oeuvre de l'invention, on estime une fonction objectif en mesurant la différence entre les données de production mesurées et les données de production simulées au sens de la norme L2. Selon une réalisation de l'invention, la fonction objectif s'écrit selon une formule de la forme :

$$F(\lambda) = \sum_{i=1}^{Nwell} \omega_{p,i} \frac{1}{N_{time}(i)} \sum_{n=1}^{N_{time}(i)} \left( \frac{P_{i,n}^{obs} - P_{i,n}^{sim}(\lambda)}{\sigma_p(i)} \right)^2$$

où

- $N_{well}$ est le nombre de puits
- $P^{obs}$ est l'ensemble des données de production mesurées
- $P^{sim}$ est l'ensemble des données de production simulées,
- $\omega_p$ sont les poids associés aux données de production,
- $\sigma_p(i)$ est l'intervalle de confiance sur les données de production au puits *i*,
- $N_{time}$ représente le nombre de mesures effectuées dans le temps pour le puits *i*,
- $\lambda = (\lambda_1, \lambda_2, ..., \lambda_M)$ sont les M paramètres représentatifs de l'état diagénétique d'un faciès.

Avantageusement, la fonction objectif peut comporter d'autres termes, notamment un terme visant à minimiser un écart entre des données sismiques simulées et des données sismiques mesurées et/ou un terme dit de régularisation permettant de réduire l'espace des solutions possibles.

Selon une mise en oeuvre de l'invention, on met à jour, en plus des paramètres représentatifs de l'état diagénétique d'au moins un faciès, un paramètre représentatif de la distribution de faciès au sein de la formation souterraine étudiée. Un tel paramètre peut concerner la distribution spatiale des faciès (cf par exemple le document Le Ravalec *et*

*al.,* 1999), ou encore les proportions de faciès (cf par exemple le document EP 1978379 A1 (US 7970593 B2)).

Selon une autre mise en oeuvre de l'invention, on met à jour, en plus des paramètres représentatifs de l'état diagénétique d'au moins un faciès, les propriétés pétrophysiques relatives à l'écoulement au sein de la formation souterraine étudiée. Un tel paramètre peut concerner la distribution spatiale des valeurs de porosités ou perméabilités dans les faciès. On pourra se référer au document (Le Ravalec *et al.,* 2014) pour un tel calage.

Différentes techniques d'optimisation d'une fonction objectif existent. On connaît par exemple la méthode basée sur les gradients, telle que décrite par exemple dans (Gosselin *et al.,* 2000). De façon générale, la fonction objectif relative au problème étudié étant non linéaire, ces techniques d'optimisation résolvent le problème posé de manière itérative. A partir de l'estimation de la fonction objectif à une itération donnée, c'est-à-dire pour un jeu de paramètres à une itération donnée, on estime un jeu de paramètres permettant d'abaisser la valeur de la fonction objectif à l'itération suivante, et ce, en tenant compte de caractéristiques de la fonction objectif (comme par exemple, le gradient de la fonction objectif dans le cas de la méthode des gradients précitée). A chaque itération, une estimation de la fonction objectif est effectuée. Notamment, à chaque itération, des données de production sont simulées sur la représentation maillée de l'itération en cours. Ce processus itératif est arrêté lorsqu'un critère d'arrêt prédéfini est atteint. Ce critère peut être basé sur la valeur de la fonction objectif (par exemple lorsque l'estimation de la fonction coût a atteint un minimum, ou bien est en deçà d'un seuil prédéfini par le spécialiste), sur la mesure de la différence entre données de production simulées et données de production mesurées (par exemple lorsque la différence quadratique moyenne est en deçà d'un seuil prédéfini par le spécialiste), ou encore lorsqu'un nombre maximum d'itérations du processus itératif, défini par le spécialiste, a été atteint. Le spécialiste a une parfaite connaissance de la manière de prédéfinir de tels critères d'arrêt de processus d'optimisation itératif.

La mise à jour selon l'invention des valeurs des paramètres représentatifs de l'état diagénétique d'un faciès donné par calage de données d'historique peut se faire pour une seule maille de la représentation maillée, sur l'ensemble de la représentation maillée (soit pour toutes les mailles de la représentation maillée) ou bien sur certaines zones identifiées (un ou plusieurs ensembles de mailles voisines) au préalable par l'ingénieur réservoir.

Selon une mise en oeuvre de l'invention, la mise à jour selon l'invention des valeurs des paramètres représentatifs de l'état diagénétique d'un faciès donné par calage de données d'historique de production est opérée pour l'ensemble des faciès lithologiques d'une représentation souterraine. Avantageusement, la mise à jour selon l'invention des valeurs des paramètres représentatifs de l'état diagénétique d'un faciès donné par calage de données d'historique est opéré pour les faciès de la formation étudiée ayant subi des phases diagénétiques impactant le plus les propriétés pétrophysiques relatives à l'écoulement.

## 3. Exploitation des hydrocarbures de la formation

Au cours de cette étape, il s'agit dans un premier temps de définir au moins un schéma d'exploitation des hydrocarbures contenus dans la formation, en tenant compte de critères technico-économiques prédéfinis par le spécialiste. Il peut s'agir d'un scénario offrant un fort taux de récupération du fluide, sur une longue durée d'exploitation, et nécessitant un nombre de puits limité. Puis, selon l'invention, on exploite le fluide de la formation étudiée en fonction de ce schéma d'exploitation optimal.

Selon l'invention, la détermination du schéma d'exploitation est réalisée à l'aide d'une simulation d'écoulement exploitant au moins la représentation maillée de la formation étudiée mise à jour à l'issue de l'étape de calage d'historique selon l'invention. En effet, à l'issue de l'étape 2 décrite précédemment, on dispose d'une représentation maillée satisfaisant les données de production mesurées. Un exemple de simulateur d'écoulement est le logiciel PumaFlow (IFP Energies nouvelles, France).

Selon l'invention, à tout instant t de la simulation, le simulateur d'écoulement résout l'ensemble des équations d'écoulement propres à chaque maille et délivre des valeurs solutions des inconnues (saturations, pressions, concentrations, température,...) prédites à cet instant t. De cette résolution, découle la connaissance des quantités d'huile produites et de l'état du gisement (distribution des pressions, saturations, etc.) à l'instant considéré. A partir d'un scénario d'exploitation donné, de la représentation maillée du gisement, on est alors capable de simuler la production d'hydrocarbures escomptée, au moyen du simulateur d'écoulement.

La définition d'un schéma d'exploitation du fluide de la formation étudiée peut consister à choisir un type de procédé de récupération (par exemple un procédé de récupération par injection d'eau) puis à déterminer, pour ce type de procédé, le nombre, la géométrie et l'implantation (position et espacement) des puits injecteurs et producteurs. Afin de définir un schéma d'exploitation optimal, différents essais de différents scenarii de production peuvent être réalisés à l'aide d'un simulateur d'écoulement. Le schéma d'exploitation offrant le meilleur taux de récupération de fluide pour un coût le plus faible sera par exemple préféré.

En sélectionnant divers scénarii, caractérisés par exemple par diverses implantations respectives des puits injecteurs et producteurs, et en simulant la production de fluide pour chacun d'eux, on peut sélectionner le scénario permettant d'optimiser la production de la formation considérée suivant des critères technico-économiques prédéfinis par le spécialiste.

Les spécialistes exploitent alors le fluide de la formation considérée selon le scénario permettant d'optimiser la production du gisement, par exemple en forant les puits injecteurs et producteurs définis par ledit schéma d'exploitation optimal et/ou en mettant en oeuvre le procédé de récupération défini par le schéma d'exploitation optimal.

L'invention concerne en outre un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des caractéristiques précédentes, lorsque ledit programme est exécuté sur un ordinateur.

## Exemple de réalisation

Les caractéristiques et avantages du procédé selon l'invention apparaîtront plus clairement à la lecture de l'exemple d'application ci-après.

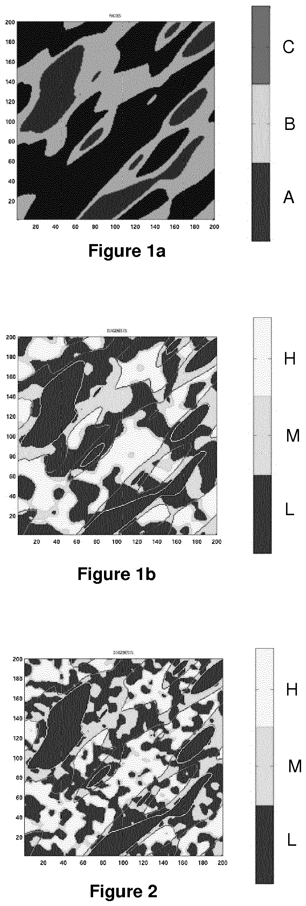

Le gisement étudié pour cette illustration correspond à une formation souterraine caractérisée par 3 faciès (notés A, B et C), chacun de ces faciès étant affecté par une (unique) phase diagénétique dont le degré de transformation ou degré diagénétique varie de faible (noté « L » pour low), moyen (noté « M » pour médium) à important (noté « H » pour high). Les proportions de ces degrés diagénétiques ont été déterminées par l'analyse des lames minces réalisées sur un échantillon de roche provenant de la formation étudiée (cf sous-étape étape 1.1 décrite ci-dessus) et sont reportées dans le Tableau 1 présenté précédemment. La représentation maillée représentative de cette formation est composée de 200x200x100 mailles, chaque maille comprenant au moins un indicateur relatif aux faciès rencontrés (faciès notés A, B, ou C) dans la maille considérée et les proportions relatives aux degrés diagénétiques de la phase diagénétique considérée (telles que présentées dans le Tableau 1), et ce pour chacun des faciès rencontrés dans la maille. La distribution des faciès et la distribution des proportions de degré diagénétique pour chaque faciès pour une section à profondeur constante donnée sont présentées respectivement en Figure 1a et en Figure 1b (les contours superposés sur la carte de distribution des degrés diagénétiques rappellent les limites des faciès A, B et C présentés en Figure 1a).

Selon l'invention, on définit une paramétrisation représentative de l'état diagénétique de chacun des faciès rencontrés dans la formation (cf sous-étape 1.2 décrite précédemment). A titre d'illustration, on présente ci-après trois modes de mise en oeuvre de l'invention, suivant trois paramétrisations différentes :

a) Modèle de variabilité spatiale et portée du variogramme

Pour cette première mise en oeuvre, on établit un variogramme décrivant la variabilité spatiale des proportions de degré diagénétique par faciès, et on en détermine la portée. A titre illustratif, on modifie la portée de ce variogramme en la divisant artificiellement par 2. La distribution des proportions de degré diagénétique par faciès en résultant est présentée en Figure 2 et est à comparer avec la distribution en Figure 1b. Pour le faciès C, aucune modification n'est visible puisque ce faciès ne contient que le degré diagénétique faible (valeur à 100% du degré L dans le Tableau 1). Pour les 2 autres faciès, on peut observer que les hétérogénéités des degrés diagénétiques sont bien plus petites.

b) Variation de la distribution spatiale des hétérogénéités par déformation graduelle

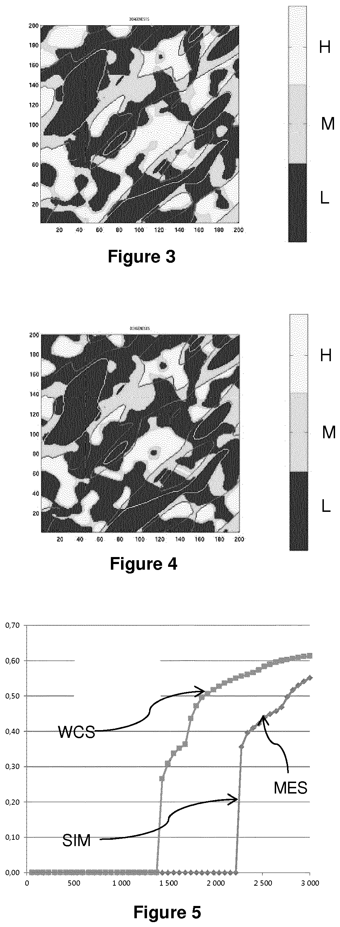

Pour cette deuxième mise en oeuvre, on établit un variogramme décrivant la variabilité spatiale des degrés diagénétiques subis par un faciès donné, et on génère des nombres aléatoires pour produire une réalisation de la fonction aléatoire définie par le variogramme. A titre illustratif, on utilise la méthode de déformation graduelle pour modifier les nombres aléatoires. Le modèle des degrés diagénétiques ainsi obtenu est présenté en Figure 3 et est à comparer à la Figure 1b. Le paramètre de déformation graduel appliqué est de 0.1, ce qui implique une faible perturbation des nombres aléatoires et donc une faible perturbation de la position des hétérogénéités. Cette perturbation suffit néanmoins pour faire apparaître une modification de la distribution des hétérogénéités des degrés diagénétiques dans les faciès A et B. Pour le faciès C, aucune modification n'est visible puisque ce faciès ne contient que le degré diagénétique faible (valeur à 100% du degré L dans le Tableau 1).

c) Variation des proportions des degrés diagénétiques

Pour cette troisième mise en oeuvre, on utilise la paramétrisation particulière présentée en section 1.2 concernant la représentation des proportions des degrés diagénétiques observés au sein d'un même faciès, permettant un contrôle par un paramètre a attaché à au moins un degré diagénétique de contrôle. Pour cet exemple, on définit le degré diagénétique de contrôle comme étant le degré L dans le faciès A, et on décrit sa proportion par le paramètre a. A titre illustratif, on augmente la proportion du degré diagénétique faible (L) dans le faciès A, en passant d'une proportion de 1/3 à 1/2 pour ce degré diagénétique. La Figure 4 présente la distribution des degrés diagénétiques en résultant. On observe bien une augmentation de la proportion du degré L, les proportions des différents degrés dans les autres faciès restant inchangées relativement.

On applique ensuite le procédé de calage d'historique selon l'invention, à partir de données de production mesurées sur la formation souterraine telle que décrite précédemment.

Pour cette mise en oeuvre du procédé selon l'invention, on met à jour uniquement les valeurs des paramètres représentatifs de l'état diagénétique du faciès A, les valeurs des paramètres représentatifs de l'état diagénétique des autres faciès ayant été obtenues par ailleurs et étant fixées pour la mise en oeuvre de l'invention.

Au cours de cette mise en oeuvre du procédé selon l'invention, on paramétrise l'état diagénétique du faciès A par les proportions des degrés diagénétiques subis par ce faciès, en utilisant la paramétrisation dite par degré diagénétique de contrôle (telle que présentée à la sous-étape 1.2). Pour cette mise en oeuvre, le paramètre a correspond à la proportion du degré diagénétique L dans le faciès A.

La formation souterraine étudiée est exploitée à partir de 2 puits : un puits injecteur d'eau dans le coin inférieur gauche et un puits producteur dans le coin supérieur droit. Les débits d'injection et de production sont de 200 m$^3$/jour. Les valeurs de *water cut* (ratio de production d'eau par à rapport au volume total de liquide) mesurées MES au puits producteur à différentes dates sont présentées par les losanges de la Figure 5. Le temps de percée, c'est-à-dire le moment où l'eau perce au puits producteur, est de 2250 jours. Par ailleurs, les mesures effectuées sur la formation (par carottage notamment) permettent d'établir des propriétés pétrophysiques associées aux différents couples (faciès, degré diagénétique) telles que reportées dans le Tableau 2.

Tableau 2

| Faciès | Degré diagénétique | Porosité (%) | Perméabilité (mD) |
|--------|--------------------|--------------|-------------------|
| A | L | 0,30 | 500 |
| A | M | 0,15 | 100 |
| A | H | 0,05 | 1 |
| B | L | 0,20 | 200 |
| B | M | 0,10 | 50 |
| C | L | 0,05 | 2 |

Afin de débuter le processus itératif de mise à jour selon l'invention, on définit une valeur d'un paramètre a contrôlant le degré diagénétique L égal à 0.38. Autrement dit, on démarre le processus itératif de calage d'historique selon l'invention en considérant une distribution des degrés diagénétiques caractérisée par une proportion du degré L (*low*) dans le faciès A de 38%.

Au moyen d'un simulateur d'écoulement, on simule l'évolution au cours du temps du *water cut* pour cette valeur du paramètre a. Le *water cut* simulé WCS sur la représentation maillée comportant la valeur de 0,38 pour le paramètre a est présenté en Figure 5 par la courbe comportant des carrés, alors que le *water cut* mesuré MES est présenté par les points symbolisés par des losanges sur cette même figure. On peut observer que ces courbes étant relativement éloignées l'une de l'autre, une mise à jour significative du paramètre a est à réaliser par le procédé selon l'invention. Par ailleurs, on peut observer que le temps de percée simulé, de 1400 jours, est nettement plus faible que le temps de percée mesuré, de 2250 jours, sur le gisement étudié.

Pour cette mise en oeuvre de l'invention, on considère une fonction objectif composée uniquement d'une mesure de la différence entre le *water cut* mesuré et le *water cut* simulé, ainsi qu'un critère d'arrêt basé sur la minimisation de cette fonction objectif.

On modifie alors de manière itérative le paramètre a représentatif de l'état diagénétique du faciès A, au moyen de cette fonction objectif évaluée à chaque itération, un *water cut* simulé étant évalué à chacune des itérations du processus itératif, sur la représentation maillée de l'itération courante.

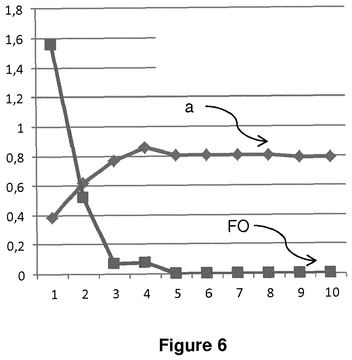

Pour cet exemple, la fonction objectif FO atteint un minimum au bout de 10 itérations (cf courbe avec des carrés en Figure 6). Le paramètre a dit de degré de contrôle obtenu à l'itération vaut alors 0,8038 (cf courbe avec des losanges en Figure 6). L'évolution du *water cut* dans le temps, simulé pour la représentation maillée déterminée à l'itération 10 est présenté en Figure 5 par la courbe pleine notée SIM. On peut observer que cette courbe se superpose parfaitement aux valeurs discrètes du *water cut* mesurées MES (losanges en Figure 5).

Ainsi, le procédé selon l'invention permet de prendre en compte l'état diagénétique d'un faciès comme paramètre d'ajustement de données de production mesurées sur une formation souterraine comportant des hydrocarbures. Un tel procédé permet de prendre en compte de façon plus exhaustive la complexité des phénomènes géologiques subis par une formation souterraine. En effet, la présente invention permet de prendre en compte, entre autres, les processus diagénétiques subis par des sédiments dès leur dépôt et tout au long de leur enfouissement, ces processus affectant significativement les propriétés d'écoulement de la roche résultant de ce dépôt sédimentaire. La présente invention permet donc d'obtenir une représentation maillée d'une formation souterraine remplie en propriétés d'écoulement plus fiables et/ou réalistes, et permet de fait d'améliorer l'exploitation des hydrocarbures de la formation.

**Revendications**

1. Procédé mis en oeuvre par ordinateur pour exploiter une formation souterraine comportant des hydrocarbures, ladite formation comportant au moins un faciès ayant subi au moins une phase diagénétique au cours des temps géologiques, à partir d'au moins un échantillon de roche issu de ladite formation, de données de production mesurées relatives à ladite formation et d'une représentation maillée représentative de ladite formation, ladite représentation maillée étant formée de mailles, chacune desdites mailles de ladite représentation maillée comportant au moins un indicateur relatif à la répartition desdits faciès présents dans ladite maille, **caractérisé en ce qu'**on réalise au moins les étapes suivantes :

   A. à partir au moins de mesures réalisées sur ledit échantillon, pour au moins un desdits faciès et pour chacune desdites mailles de ladite représentation maillée, on détermine une valeur d'au moins un paramètre de l'état diagénétique dudit faciès ;

   B. à partir desdites données de production mesurées, pour au moins une maille de ladite représentation maillée, on met à jour au moins lesdites valeurs desdits paramètres de l'état diagénétique d'au moins un desdits faciès selon les étapes suivantes :

      i. pour chacune desdites mailles de ladite représentation maillée, à partir desdites valeurs desdits paramètres déterminés de l'état diagénétique desdits faciès, on détermine au moins une propriété pétrophysique relative à l'écoulement dans ladite formation ;
      ii. au moyen d'un simulateur d'écoulement et de ladite représentation maillée remplie en propriétés pétrophysiques relatives à l'écoulement, on simule des données de production relatives à ladite formation ;
      iii. on détermine une fonction objectif mesurant au moins une différence entre lesdites données de production mesurées et lesdites données de production simulées ;
      iv. pour au moins une desdites mailles de ladite représentation maillée, on modifie, à partir de ladite fonction objectif, au moins ladite valeur dudit paramètre de l'état diagénétique pour un desdits faciès ;

   et on réitère les étapes i) à iv) jusqu'à ce qu'un critère d'arrêt prédéterminé soit atteint ;
   C- à partir d'au moins ladite représentation maillée mise à jour, on détermine un schéma d'exploitation desdits hydrocarbures de ladite formation, et on exploite lesdits hydrocarbures de ladite formation.

2. Procédé selon la revendication 1, dans lequel ledit paramètre de l'état diagénétique d'un desdits faciès correspond à la variabilité spatiale d'au moins un degré diagénétique d'au moins une desdites phases diagénétiques subies par ledit faciès.

3. Procédé selon la revendication 2, dans lequel ladite variabilité spatiale est paramétrée par la portée d'un variogramme portant sur la distribution dudit degré diagénétique de ladite phase diagénétique.

4. Procédé selon la revendication 1, dans lequel ledit paramètre de l'état diagénétique d'un desdits faciès correspond à la proportion d'au moins un degré diagénétique d'au moins une desdites phases diagénétiques subies par ledit faciès.

5. Procédé selon la revendication 4, dans lequel ledit paramètre de l'état diagénétique correspond à la proportion d'un desdits degrés diagénétiques, les proportions des autres degrés diagénétiques restant constantes relativement.

6. Procédé selon l'une des revendications précédentes, dans lequel, à l'étape B), on met en outre à jour un paramètre représentatif de la distribution desdits faciès dans ladite formation et/ou une desdites propriétés pétrophysiques relatives à l'écoulement dans ladite formation.

7. Procédé selon l'une des revendications précédentes, dans lequel on réalise l'étape B) ii) au moyen d'une simulation bi-plurigaussienne.

**8.** Procédé selon l'une des revendications précédentes, dans lequel ledit critère d'arrêt correspond à un minimum de ladite fonction objectif, à un nombre maximal d'itérations de l'étape B), ou bien à une différence maximale entre lesdites données de production mesurées et lesdites données de production simulées.

**9.** Procédé selon l'une des revendications précédentes, dans lequel ladite détermination dudit schéma d'exploitation comprend la détermination de la position et de la géométrie de puits injecteurs et/ou producteurs, et/ou la détermination du type de récupération assistée.

**10.** Produit programme d'ordinateur téléchargeable depuis un réseau de communication et/ou enregistré sur un support lisible par ordinateur comprenant des instructions de code de programme pour la mise en oeuvre du procédé selon l'une des revendications précédentes, lorsque ledit programme est exécuté sur un ordinateur.

**Patentansprüche**

**1.** Verfahren, welches von einem Computer durchgeführt wird, zur Nutzung einer unterirdischen Formation, die Kohlenwasserstoffe umfasst, wobei die Formation mindestens eine Fazies umfasst, die mindestens eine diagenetische Phase während geologischer Zeiten durchlaufen hat, ausgehend von mindestens einer Gesteinsprobe, die von der Formation stammt, von Produktionsdaten, die in Bezug auf die Formation gemessen werden, und einer Gitterdarstellung, die für die Formation repräsentativ ist, wobei die Gitterdarstellung aus Gittermaschen gebildet wird, wobei jede der Gittermaschen der Gitterdarstellung mindestens einen Indikator in Bezug auf die Verteilung der Fazies umfasst, die in der Gittermasche vorhanden sind, **dadurch gekennzeichnet, dass** mindestens die folgenden Schritte durchgeführt werden:

A. mindestens aus Messungen, die an der Probe vorgenommen wurden, für mindestens eine der Fazies und für jede der Gittermaschen der Gitterdarstellungen, wird ein Wert mindestens eines Parameters des diagenetischen Zustands der Fazies bestimmt;
B. aus den gemessenen Produktionsdaten, für mindestens eine Gittermasche der Gitterdarstellung, werden mindestens die Werte der Parameter des diagenetischen Zustands mindestens einer der Fazies gemäß den folgenden Schritten aktualisiert:

i. für jede der Gittermaschen der Gitterdarstellung, aus den Werten der bestimmten Parameter des diagenetischen Zustands der Fazies, wird mindestens eine petrophysikalische Eigenschaft in Bezug auf das Fließen in der Formation bestimmt;
ii. mit einem Flusssimulator und der Gitterdarstellung, die mit petrophysikalischen Eigenschaften in Bezug auf das Fließen gefüllt wurde, werden Produktionsdaten in Bezug auf die Formation simuliert;
iii. eine Zielfunktion wird bestimmt, die mindestens eine Differenz zwischen den gemessenen Produktionsdaten und den simulierten Produktionsdaten misst;
iv. für mindestens eine der Gittermaschen der Gitterdarstellung wird, aus der Zielfunktion, mindestens der Wert des Parameters des diagenetischen Zustands für eine der Fazies modifiziert;

und die Schritte i) bis iv) werden reiteriert, bis ein vorherbestimmtes Abbruchkriterium erreicht wird;
C. mindestens aus der aktualisierten Gitterdarstellung wird ein Nutzungsschema der Kohlenwasserstoffe der Formation bestimmt, und die Kohlenwasserstoffe der Formation werden genutzt.

**2.** Verfahren nach Anspruch 1, wobei der Parameter des diagenetischen Zustands einer der Fazies der Raumvariabilität mindestens eines diagenetischen Grads mindestens einer der diagenetischen Phasen entspricht, die von der Fazies durchlaufen wurden.

**3.** Verfahren nach Anspruch 2, wobei die Raumvariabilität für den Umfang eines Variogramms parametriert wird, das die Verteilung des diagenetischen Grads der diagenetischen Phase betrifft.

**4.** Verfahren nach Anspruch 1, wobei der Parameter des diagenetischen Zustands einer der Fazies dem Anteil mindestens eines diagenetischen Grads mindestens einer der diagenetischen Phasen entspricht, die von der Fazies durchlaufen wurden.

**5.** Verfahren nach Anspruch 4, wobei der Parameter des diagenetischen Zustands dem Anteil eines der diagenetischen Grade entspricht, wobei die Anteile der anderen diagenetischen Grade relativ konstant bleiben.

**6.** Verfahren nach einem der vorhergehenden Ansprüche, wobei, in dem Schritt B), außerdem ein Parameter aktualisiert wird, der für die Verteilung der Fazies in der Formation und/oder eine der petrophysikalischen Eigenschaften in Bezug auf das Fließen der der Formation repräsentativ ist.

**7.** Verfahren nach einem der vorhergehenden Ansprüche, wobei der Schritt B) ii) mit Hilfe einer bi-plurigaußschen Simulation durchgeführt wird.

**8.** Verfahren nach einem der vorhergehenden Ansprüche, wobei das Abbruchkriterium einem Minium der Zielfunktion, einer maximalen Anzahl von Iterationen des Schritts B) oder auch einer maximalen Differenz zwischen den gemessenen Produktionsdaten und den simulierten Produktionsdaten entspricht.

**9.** Verfahren nach einem der vorhergehenden Ansprüche, wobei die Bestimmung des Nutzungsschemas die Bestimmung der Position und der Geometrie von Einspritz- und/oder Produktionsbohrlöchern, und/oder die Bestimmung des Typs der unterstützten Förderung umfasst.

**10.** Computerprogrammprodukt, welches von einem Kommunikationsnetz heruntergeladen werden kann und/oder auf einem computerlesbaren Medium gespeichert ist, umfassend Programmcodeinstruktionen zur Durchführung des Verfahrens nach einem der vorhergehenden Ansprüche, wenn das Programm auf einem Computer ausgeführt wird.

## Claims

**1.** Computer-implemented method for exploiting an underground formation containing hydrocarbons, said formation containing at least one facies having undergone at least one diagenetic phase over geological time, based on at least one rock sample from said formation, on measured production data relating to said formation and on a meshed representation representative of said formation, said meshed representation being formed of meshes, each of said meshes of said meshed representation containing at least one indicator relating to the distribution of said facies present in said mesh, **characterized in that** at least the following steps are performed:

A. based at least on measurements performed on said sample, for at least one of said facies and for each of said meshes of said meshed representation, determining a value of at least one parameter of the diagenetic state of said facies;
B. based on said measured production data, for at least one mesh of said meshed representation, updating at least said values of said parameters of the diagenetic state of at least one of said facies, using the following steps:

i. for each of said meshes of said meshed representation, based on said values of said determined parameters of the diagenetic state of said facies, determining at least one petrophysical property relating to the flow in said formation;
ii. using a flow simulator and said meshed representation filled with petrophysical properties relating to the flow, simulating production data relating to said formation;
iii. determining an objective function measuring at least one difference between said measured production data and said simulated production data;
iv. for at least one of said meshes of said meshed representation, modifying, based on said objective function, at least said value of said parameter of the diagenetic state for one of said facies;

and reiterating steps i) to iv) until a predetermined stoppage criterion is reached;
C. based at least on said updated meshed representation, determining a scheme for exploiting said hydrocarbons of said formation, and exploiting said hydrocarbons of said formation.

**2.** Method according to Claim 1, wherein said parameter of the diagenetic state of one of said facies corresponds to the spatial variability of at least one diagenetic degree of at least one of said diagenetic phases undergone by said facies.

**3.** Method according to Claim 2, wherein said spatial variability is parameterized by the range of a variogram relating to the distribution of said diagenetic degree of said diagenetic phase.

**4.** Method according to Claim 1, wherein said parameter of the diagenetic state of one of said facies corresponds to the proportion of at least one diagenetic degree of at least one of said diagenetic phases undergone by said facies.

5. Method according to Claim 4, wherein said parameter of the diagenetic state corresponds to the proportion of one of said diagenetic degrees, the proportions of the other diagenetic degrees remaining relatively constant.

6. Method according to one of the preceding claims, wherein, in step B), a parameter representative of the distribution of said facies in said formation and/or one of said petrophysical properties relating to the flow in said formation are/is updated.

7. Method according to one of the preceding claims, wherein step B) ii) is performed by way of a bi-plurigaussian simulation.

8. Method according to one of the preceding claims, wherein said stoppage criterion corresponds to a minimum of said objective function, to a maximum number of iterations of step B), or else to a maximum difference between said measured production data and said simulated production data.

9. Method according to one of the preceding claims, wherein said determination of said exploitation scheme comprises determining the position and the geometry of injection and/or production wells, and/or determining the type of assisted recovery.

10. Computer program product downloadable from a communication network and/or recorded on a computer-readable medium, comprising program code instructions for implementing the method according to one of the preceding claims when said program is executed on a computer.

**Figure 1a**

**Figure 1b**

**Figure 2**

**Figure 3**

**Figure 4**

**Figure 5**

**Figure 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 7970593 A
- EP 1978379 A1
- US 7970593 B2
- US 2008243447 A

**Littérature non-brevet citée dans la description**

- **BARBIER, M. ; HAMON, Y. ; DOLIGEZ, B. ; CALLOT, J.-P. ; FLOQUET, M. ; DANIEL, J.-M.** Stochastic joint simulation of facies and diagenesis,: A case study on early diagenesis of the Madison formation (Wyoming, USA). *OGST,* 2012, vol. 67 (1), 123-145
- **CAERS, J. ; HOFFMAN, T.** The probability perturbation method: A new look at Bayesian inverse modeling. *Math. Geol.,* 2006, vol. 38 (1), 81-100
- **DOLIGEZ, B. ; HAMON, Y. ; BARBIER, M. ; NADER, F. ; LERAT, O.** Advanced workflows for joint modelling of sedimentary facies and diagenetic overprint. Imact on reservoir quality. *SPE 146621, SPE ATCE,* 2011
- **GOSSELIN, O. ; COMINELLI, A. ; VAN DEN BERG, S. ; CHOWDHURY, S.D.** A Gradient-Based Approach for History Matching of Both Production and 4D Seismic Data. *Proceeding 7th European Conférence on the Math. of Oil Recovery,* 2000
- **GUARDIANO, F. ; SRIVASTAVA, M.** Multivariate geostatistics: beyond bivariate moments. Kluwer Academic Publications, 1993
- **HOLLAND, J.H.** Adaptation In Natural And Artificial Systems. University Of Michigan Press, 1975
- **HU, L.-Y.** Graduai deformation and iterative calibration of Gaussian-related stochastic models. *Mathematical Geology,* 2000, vol. 32 (1), 87-108
- **LE RAVALEC-DUPIN, M. ; DA VEIGA, S.** Cosimulation as a perturbation method for calibrating porosity and permeability fields to dynamic data. *Computers and Geosciences,* 2011, vol. 37, 1400-1412

- **LE RAVALEC, M. ; DOLIGEZ, B. ; LERAT, O.** *Integrated reservoir characterization and modeling,* 2014, http://books.ifpenergiesnouvelles.fr/ebooks/integrated reservoir characterizatio n and modeling/
- **LE RAVALEC, M. ; HU, L.-Y. ; NOETINGER, B.** Stochastic Reservoir Modeling Constrained to Dynamic Data: Local Calibration and Inference of the Structural Parameters. *SPE 56556, SPE ATCE,* 1999
- **PONTIGGIA, M. ; ORTENZI, A. ; RUVO, L.** New integrated approach for diagenesis characterization and simulation. *SPE 127236, SPE North Africa Technical Conférence and Exhibition,* 2010
- **PRESS, W.H. ; TEUFOLSKY, S.A. ; VETTERLING, W.T. ; FLANNERY, B.P.** Numerical recipes in C. Cambridge University Press, 1988
- **RENARD, D. ; BEUCHER, H. ; DOLIGEZ, B.** Heterotopic bi-categorical variables in pluri-Gaussian truncated simulation. *VIII Int. Geostat. Congress, GEOSTATS,* 2008, vol. 1, 289-298
- **TARANTOLA, A.** Inverse Problem Theory - Methods For Data Fitting And Model Parameter Estimation. Elsevier Science Publishers, 1987, 613
- **TILLIER, E. ; ENCHERY, G. ; LE RAVALEC, M. ; GERVAIS, V.** Local and continuous updating of facies proportions for history-matching. *Journal Petroleum Science and Engineering,* 2010, vol. 73 (3-4), 194-203
- **M. PONTIGGIA.** *New integrated approach for diagenesis characterization and simulation,* 2010